# EUROPEAN PATENT APPLICATION

(11) **EP 4 369 038 A1**
(43) Date of publication of application: **15.05.2024**
(21) Application number: 22837512.7
(22) Date of filing: 24.06.2022
(51) Int. Cl.: G01S 15/52, G01S 15/931

(54) **OBJECT DETECTION SYSTEM AND OBJECT DETECTION DEVICE**

(30) Priority: 07.07.2021 JP 2021113092
(71) Applicant: AISIN CORPORATION, Kariya-shi, Aichi 448-8650 (JP)
(72) Inventor: SUGAE, Ippei, Kariya-shi, Aichi 448-8650 (JP); WAKITA, Kosuke, Kariya-shi, Aichi 448-8650 (JP)
(74) Representative: TBK
(86) International application number: PCT/JP2022/025399
(87) International publication number: WO 2023/282095

(57) **Abstract**

An object detection system includes a plurality of object detection devices arranged at predetermined intervals, in which each of the plurality of object detection devices includes: a transmission part that transmits a transmission wave of a predetermined frequency in a state in which a positional relationship between a position of the object detection device and a position of an object to be detected changes relatively; a reception part that receives a reception wave that has returned in response to reflection on the object; an acquisition part that acquires a first Doppler shift amount between the transmission wave and the reception wave on the basis of a reception frequency as a result of frequency analysis on the reception wave and the transmission frequency of the transmission wave; an estimation part that estimates an arrival direction of the reception wave on the basis of the first Doppler shift amount and a second Doppler shift amount in a case where it is assumed that the reception wave has returned from substantially a front; and a determination part that determines a processing mode of the reception wave on the basis of the arrival direction of the reception wave.

## Description

### TECHNICAL FIELD

The present disclosure relates to an object detection system and an object detection device.

### BACKGROUND ART

Conventionally, there is known a technique for detecting information on an object, such as a distance to the object, by transmitting an ultrasonic wave as a transmission wave and receiving a reception wave as the transmission wave that has returned after being reflected by the object. For example, a conventional literature discloses a configuration in which a plurality of object detection devices (ultrasonic sensors) for transmitting and receiving ultrasonic waves in water are arranged in substantially a vertical direction. It is configured such that, by transmitting and receiving ultrasonic waves using the object detection devices arranged in the vertical direction, position information on an object in a depth direction (vertical direction) in water can be obtained.

### CITATION LIST

### PATENT LITERATURE

Patent Literature 1: JP 9-15325 A

### SUMMARY OF INVENTION

### TECHNICAL PROBLEMS

In the above-described conventional technique, a plurality of object detection devices are arranged in substantially a vertical direction to acquire position information on an object in a depth direction. However, for example, in a case where the conventional technique is applied to a vehicle traveling on a road surface to detect position information on an object existing in a height direction with respect to the road surface, it is necessary to arrange a plurality of object detection devices in a direction perpendicular to the road surface. However, in a vehicle, arrangement of the object detection devices in the vertical direction is difficult in terms of space and is also not preferable in terms of design. Therefore, in a case where the object detection devices are disposed in a vehicle, the object detection devices are generally arranged in a vehicle width direction on a front bumper and a rear bumper, and there is a problem that it is difficult to acquire position information on an object existing in a height direction with respect to a road surface.

Therefore, one of the problems of the present disclosure is to provide an object detection system and an object detection device that, while a plurality of object detection devices are arranged in a vehicle width direction, can acquire position information on an object existing in substantially a vertical direction (elevation angle direction or depression angle direction) with respect to a road surface and efficiently use the position information.

### SOLUTIONS TO PROBLEMS

An object detection system as an example of the present disclosure includes a plurality of object detection devices arranged at predetermined intervals, in which each of the plurality of object detection devices includes: a transmission part that transmits a transmission wave of a predetermined frequency in a state in which a positional relationship between a position of the object detection device and a position of an object to be detected changes relatively; a reception part that receives a reception wave based on the transmission wave that has returned in response to reflection on the object; an acquisition part that acquires a first Doppler shift amount between the transmission wave and the reception wave on the basis of a reception frequency as a result of frequency analysis on the reception wave and the transmission frequency of the transmission wave; an estimation part that estimates an arrival direction of the reception wave on the basis of the first Doppler shift amount and a second Doppler shift amount in a case where it is assumed that the reception wave has returned from substantially a front; and a determination part that determines a processing mode of the reception wave on the basis of the arrival direction of the reception wave. According to this configuration, for example, a Doppler shift amount changes depending on a position where the object exists, that is, the direction. For example, the first Doppler shift amount, obtained in a case where the object exists obliquely above with respect to the object detection device, is smaller than the second Doppler shift amount obtained in a case where it is assumed that the object exists substantially in front of the object detection device. Therefore, based on a difference between the first Doppler shift amount and the second Doppler shift amount, the arrival direction (reflection direction) of the reception wave in which Doppler shift occurs, that is, the direction in which the object exists, can be estimated. As a result, the existing direction of the object (position information on the object) can be efficiently used.

Furthermore, the plurality of object detection devices of the object detection system described above may be arranged, for example, in the vehicle width direction of a vehicle, and the estimation part may estimate the arrival direction of the reception wave in at least one of the elevation angle direction and the depression angle direction with respect to the traveling direction of the vehicle. According to this configuration, it is possible to easily recognize, for example, an object (e.g., a beam of a gate or the like) existing in the elevation angle direction with respect to the traveling direction of the vehicle or an object (e.g., a road surface or the like) existing in the depression angle direction, and it is possible to easily exclude an object, less likely to come into contact even if it exists in the vicinity of the vehicle, from targets of contact avoidance processing or the like. As a result, simplification and efficiency of the processing can be easily achieved.

Furthermore, the estimation part of the object detection system described above may calculate the second Doppler shift amount on the basis of, for example, a value changed by a transition amount based on a vehicle speed that the vehicle can acquire by a vehicle speed sensor. According to this configuration, for example, estimation accuracy of the arrival direction of the reception wave can be easily improved.

Furthermore, the estimation part of the object detection system described above may estimate the position of an object from the average value of the arrival directions of the reception waves in the elevation angle direction or the depression angle direction in each of the plurality of object detection devices. According to this configuration, for example, estimation accuracy of the arrival direction of the reception wave can be easily improved.

An object detection device as an example of the present disclosure includes: a transmission part that transmits a transmission wave of a predetermined frequency in a state in which a positional relationship with respect to an object to be detected changes relatively; a reception part that receives a reception wave based on the transmission wave that has returned in response to reflection on the object; an acquisition part that acquires a first Doppler shift amount between the transmission wave and the reception wave on the basis of a reception frequency as a result of frequency analysis on the reception wave and the transmission frequency of the transmission wave; an estimation part that estimates an arrival direction of the reception wave on the basis of the first Doppler shift amount and a second Doppler shift amount in a case where it is assumed that the reception wave has returned from substantially a front; and a determination part that determines a processing mode of the reception wave on the basis of the arrival direction of the reception wave. According to this configuration, for example, a Doppler shift amount changes depending on a position where the object exists, that is, the direction. For example, the first Doppler shift amount, obtained in a case where the object exists obliquely above with respect to the object detection device, is smaller than the second Doppler shift amount obtained in a case where it is assumed that the object exists substantially in front of the object detection device. Therefore, based on a difference between the first Doppler shift amount and the second Doppler shift amount, the arrival direction (reflection direction) of the reception wave in which Doppler shift occurs, that is, the direction in which the object exists, can be estimated. As a result, the existing direction of the object (position information on the object) can be efficiently used.

### BRIEF DESCRIPTION OF DRAWINGS

FIG. 1 is an exemplary schematic diagram illustrating an appearance of a vehicle including an object detection system according to an embodiment as viewed from above.
FIG. 2 is an exemplary schematic block diagram illustrating rough hardware configurations of an electronic control unit (ECU) and an object detection device of the object detection system according to the embodiment.
FIG. 3 is an exemplary schematic graph for explaining an outline of a technique that the object detection device according to the embodiment uses to detect the distance to an object.
FIG. 4 is an exemplary schematic block diagram illustrating a detailed configuration of the object detection device according to the embodiment.
FIG. 5 is an exemplary schematic perspective diagram illustrating a state in which a vehicle equipped with the object detection system according to the embodiment is traveling toward an object including a structure in a vehicle width direction and a height direction (a direction perpendicular to a road surface).
FIG. 6 is an exemplary schematic diagram illustrating a relationship between the vehicle and object illustrated in FIG. 5 as viewed from above.
FIG. 7 is an exemplary schematic diagram illustrating the relationship between the vehicle and object illustrated in FIG. 5 as viewed from a side.
FIG. 8 is an exemplary schematic flowchart showing a series of processing in a case where the object detection system according to the embodiment detects and utilizes position information on an object.

### DESCRIPTION OF EMBODIMENTS

Hereinafter, embodiments and modifications of the present disclosure will be described with reference to the drawings. The configurations of the embodiments and modifications described below, and the functions and effects brought by the configurations are merely examples, and are not limited to the following description.

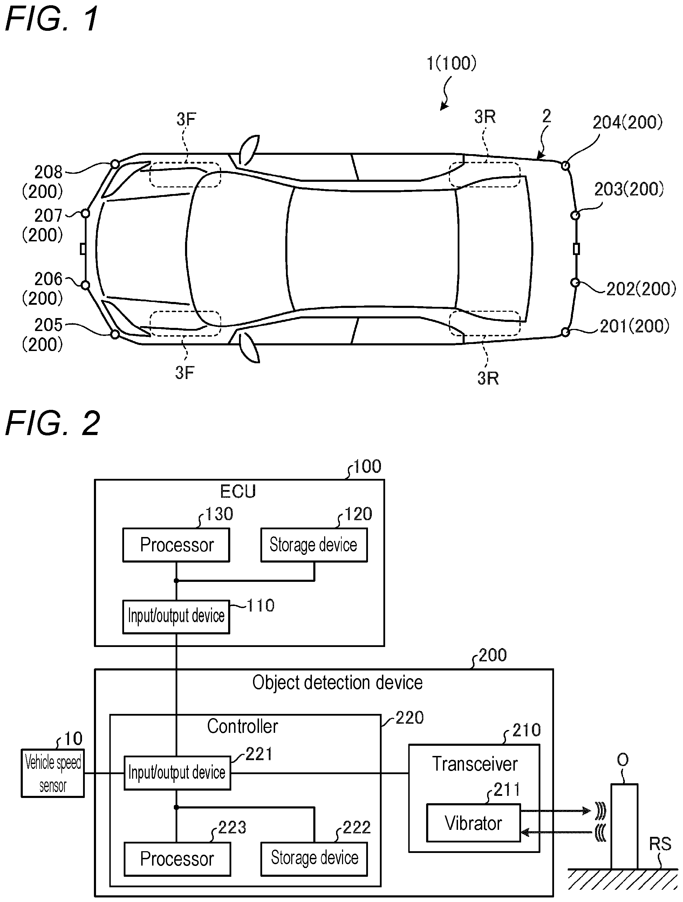

FIG. 1 is an exemplary schematic diagram illustrating an appearance of a vehicle 1 including an object detection system according to an embodiment as viewed from above.

As illustrated in FIG. 1, the object detection system includes an electronic control unit (ECU) 100 mounted inside a four-wheeled vehicle 1 including a pair of front wheels 3F and a pair of rear wheels 3R, and object detection devices 201 to 208 mounted on an exterior of the vehicle 1.

In the example illustrated in FIG. 1, the object detection devices 201 to 204 are installed (arranged), as an example, at positions different from each other at predetermined intervals in the vehicle width direction in, for example, a rear bumper at a rear end of a vehicle body 2 as the exterior of the vehicle 1. Furthermore, the object detection devices 205 to 208 are installed (arranged) at different positions different from each other at predetermined intervals in the vehicle width direction on, for example, a front bumper at a front end of the vehicle body 2.

Here, in the present embodiment, the hardware configurations and functions of the object detection devices 201 to 208 are each the same. Therefore, hereinafter, the object detection devices 201 to 208 may be collectively referred to as an object detection device 200 for the sake of simplicity. Furthermore, the predetermined intervals between the respective object detection devices 200 can be appropriately adjusted according to the shape of the bumper or the like, and do not need to strictly match. Furthermore, the vertical directions do not need to match the strict vehicle width direction as long as they are within the formation range of the bumper, and a slight deviation may occur.

Furthermore, in the present embodiment, the installation positions of the object detection devices 200 are not limited to the example illustrated in FIG. 1. The object detection devices 200 may be installed on a side surface of the vehicle body 2 in addition to at least one of the rear bumper and the front bumper. Furthermore, the object detection devices 200 may be installed at positions of either the rear bumper or the front bumper. Furthermore, in the embodiment, the number of the object detection devices 200 is not limited to the example illustrated in FIG. 1. However, the technique of the embodiment is effective for a configuration in which there are a plurality of the object detection devices 200.

Based on a configuration as described below, the object detection system according to the present embodiment transmits and receives ultrasonic waves and acquires a time difference between the transmission and the reception and the like, whereby information on an object including a human existing in the surroundings (e.g., an object O illustrated in FIG. 2 to be described later, a gate 500 to be described later, or the like) is detected.

FIG. 2 is an exemplary schematic block diagram illustrating hardware configurations of the ECU 100 and the object detection device 200 of the object detection system according to the embodiment.

As illustrated in FIG. 2, the ECU 100 has a hardware configuration similar to that of a normal computer. More specifically, the ECU 100 includes an input/output device 110, a storage device 120, and a processor 130.

The input/output device 110 is an interface for realizing transmission and reception of information between the ECU 100 and the outside (in the example illustrated in FIG. 1, the object detection device 200).

The storage device 120 includes a main storage device, such as a read only memory (ROM) or a random access memory (RAM), and/or an auxiliary storage device such as a hard disk drive (HDD) or a solid state drive (SSD).

The processor 130 manages various processing to be executed in the ECU 100. The processor 130 includes an arithmetic device such as a central processing unit (CPU). The processor 130 reads and executes computer programs stored in the storage device 120 to implement various functions such as parking assistance.

On the other hand, the object detection device 200 includes a transceiver 210 and a controller 220, as illustrated in FIG. 2. With these configurations, the object detection device 200 is configured as an in-vehicle sonar as an example of an in-vehicle sensor that detects a distance to an object existing around the vehicle 1.

The transceiver 210 includes a vibrator 211 such as a piezoelectric element, the vibrator 211 realizing transmission and reception of ultrasonic waves.

More specifically, the transceiver 210 transmits, as a transmission wave, an ultrasonic wave generated in response to the vibration of the vibrator 211, and receives, as a reception wave, the vibration of the vibrator 211 caused when the ultrasonic wave transmitted as the transmission wave returns after being reflected on an object existing outside. In the example illustrated in FIG. 2, a road surface RS and the object O installed on the road surface RS are illustrated as objects that can reflect the ultrasonic waves from the transceivers 210.

Note that, in the example illustrated in FIG. 2, a configuration is illustrated in which both transmission of the transmission wave and reception of the reception wave are realized by a single transceiver 210 including a single vibrator 211. However, the technique of the embodiment can be naturally applied also to a configuration in which the configuration on the transmission side and the configuration on the reception side are separated, such as a configuration in which a vibrator for transmitting a transmission wave and a vibrator for receiving a reception wave are separately provided.

The controller 220 has a hardware configuration similar to that of a normal computer. More specifically, the controller 220 includes an input/output device 221, a storage device 222, and a processor 223.

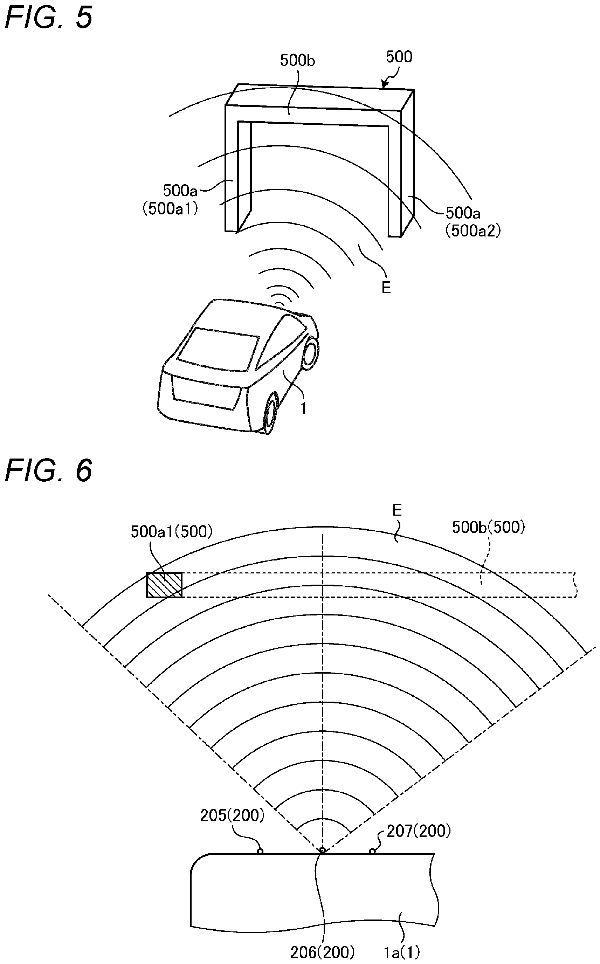

The input/output device 221 is an interface for realizing transmission and reception of information between the controller 220 and the outside (in the example illustrated in FIG. 1, the ECU 100 and the transceiver 210). Furthermore, vehicle speed information acquired by a vehicle speed sensor 10 is input to the input/output device 221. The vehicle speed information is used for estimating the arrival direction of the reception wave on the basis of the Doppler shift amount generated, while the vehicle 1 is traveling, with the reception wave that has returned after being reflected on an object (e.g., the object O, the gate 500 as illustrated in FIG. 5, or the like). Details of the estimation of the arrival direction of the reception wave will be described later.

The storage device 222 includes a main storage device, such as a ROM or a RAM, and/or an auxiliary storage device such as an HDD or an SSD.

The processor 223 manages various processing to be executed in the controller 220. The processor 223 includes an arithmetic device such as a CPU. The processor 223 reads and executes computer programs stored in the storage device 222 to implement various functions.

Here, the object detection device 200 according to the embodiment detects, as one piece of information on an object, the distance to the object by a technique called a so-called time of flight (TOF) method. As described in detail below, the TOF method is a technique for calculating a distance to an object in consideration of a difference between a timing when a transmission wave is transmitted (more specifically, the wave starts to be transmitted) and a timing when a reception wave is received (more specifically, the wave starts to be received).

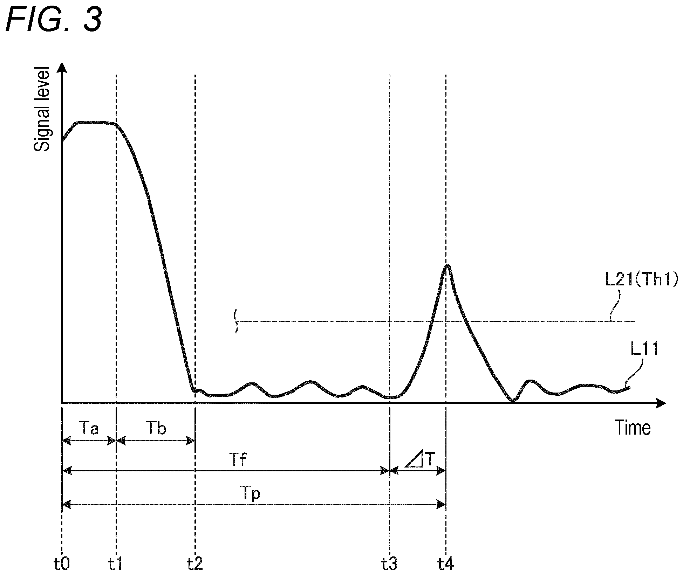

FIG. 3 is an exemplary schematic graph for explaining an outline of a technique that the object detection device 200 according to the embodiment uses to detect the distance to the object.

In the example illustrated in FIG. 3, a temporal change in the signal level (e.g., amplitude) of the ultrasonic wave transmitted and received by the object detection device 200 according to the embodiment is represented in a graph format. In the graph shown in FIG. 3, the horizontal axis corresponds to time, and the vertical axis corresponds to the signal level of the signal transmitted and received by the object detection device 200 via the transceiver 210 (vibrator 211).

In the graph shown in FIG. 3, a solid line L11 represents an example of the signal level of the signal transmitted and received by the object detection device 200, that is, an envelope (envelope waveform) representing a temporal change in the degree of vibration of the vibrator 211. From the solid line L11, it can be seen that, when the vibrator 211 is driven at a timing t0 only for a time Ta and vibrates, the transmission of the transmission wave is completed at a timing t1 and then during a time Tb until it reaches a timing t2, the vibration of the vibrator 211 due to inertia continues while attenuating. Therefore, in the graph shown in FIG. 3, the time Tb corresponds to a so-called reverberation time.

The solid line L11 reaches a peak at which, at a timing t4 when a time Tp has elapsed from the timing t0 when the transmission of the transmission wave is started, the degree of the vibration of the vibrator 211 exceeds (or is equal to or greater than) a predetermined threshold Th1 indicated by an alternate long and short dash line L21. The threshold Th1 is a value set in advance to identify whether the vibration of the vibrator 211 is caused by reception of a reception wave as the transmission wave that has returned after being reflected by an object to be detected (e.g., the object O illustrated in FIG. 2) or it is caused by reception of a reception wave as the transmission wave that has returned after being reflected by an object not to be detected (e.g., the road surface RS illustrated in FIG. 2).

Note that FIG. 3 illustrates an example in which the threshold Th1 is set as a constant value that does not change over time, but in the embodiment, the threshold Th1 may be set as a value that changes over time.

Here, vibration having a peak exceeding (or equal to or greater than) the threshold Th1 can be regarded as being caused by reception of a reception wave as the transmission wave that has returned after being reflected by an object to be detected. On the other hand, vibration having a peak equal to or less than (or less than) the threshold Th1 can be regarded as being caused by reception of a reception wave as the transmission wave that has returned after being reflected by an object not to be detected.

Therefore, it can be seen from the solid line L11 that the vibration of the vibrator 211 at the timing t4 is caused by reception of a reception wave as the transmission wave that has returned after being reflected by an object to be detected.

In the solid line L11, the vibration of the vibrator 211 attenuates after the timing t4. Therefore, the timing t4 corresponds to a timing when the reception of the reception wave as the transmission wave that has returned after being reflected by an object to be detected is completed, in other words, a timing when the transmission wave transmitted last at the timing t1 returns as the reception wave.

Furthermore, in the solid line L11, a timing t3 as the start point of the peak at the timing t4 corresponds to a timing when the reception of the reception wave as the transmission wave that has returned after being reflected by an object to be detected starts, in other words, a timing when the transmission wave first transmitted at the timing t0 returns as the reception wave. Therefore, in the solid line L11, a time ΔT between the timing t3 and the timing t4 is equal to the time Ta as a transmission time of the transmission wave.

In order to obtain the distance to an object to be detected by the TOF method on the basis of the above, it is necessary to obtain a time Tf between the timing t0 when the transmission wave starts to be transmitted and the timing t3 when the reception wave starts to be received. The time Tf can be obtained by subtracting the time ΔT, equal to the time Ta as the transmission time of the transmission wave, from the time Tp as a difference between the timing t0 and the timing t4 when the signal level of the reception wave reaches a peak exceeding the threshold Th1.

The timing t0 when the transmission wave starts to be transmitted can be easily specified as a timing when the object detection device 200 starts its operation, and the time Ta as the transmission time of the transmission wave is determined in advance by setting or the like. Therefore, in order to obtain the distance to an object to be detected by the TOF method, it is eventually important to specify the timing t4 when the signal level of the reception wave reaches a peak exceeding the threshold Th1. Then, in order to specify the timing t4, it is important to accurately detect the reception wave as the transmission wave that has returned after being reflected by an object to be detected, by increasing the identification of the reception wave. Furthermore, in a configuration in which a plurality of the object detection devices 200 are provided as illustrated in FIG. 1, the plurality of transmission waves may be transmitted substantially simultaneously (simultaneously in parallel) from the respective object detection devices 200 in order to detect information on an object existing in the surroundings in more detail. Therefore, it is desirable to improve the identification of each of the transmission waves (reception waves).

Meanwhile, in the case of a configuration in which the object detection devices 200 are arranged in the vehicle width direction of the vehicle 1 as illustrated in FIG. 1 and when position information on an object is acquired by transmitting an ultrasonic wave and receiving its reflected wave as the reception wave, the distance to the object can be detected as described above, but it is difficult to specify position information in a direction (vertical direction) in which the object is substantially orthogonal to the vehicle width direction. For example, a case, where the vehicle 1 travels forward and in front of the vehicle 1 (traveling direction) there is an object (obstacle) that may come into contact with the vehicle 1, is considered. In this case, the position of the object, existing in front of the vehicle 1 and in the vehicle width direction, can be recognized. Therefore, it is possible to perform object avoidance processing (avoidance travel, avoidance guidance) to pass through, for example, the side of the object. On the other hand, for example, a case where an object exists at a position higher than the vehicle height of the vehicle 1, for example, a case where there is a beam or the like connecting left and right pillars above a bridge girder or a gate is considered. In this case, the vehicle 1 should be able to pass through an object existing above (in the sky) without performing avoidance travel, but since the position information on the object in the vertical direction cannot be accurately acquired only with the distance between the vehicle 1 and the object detected, there may be a case where it is erroneously determined that the vehicle may be likely to come into contact and unnecessary object avoidance processing is performed.

Therefore, when the traveling vehicle 1 approaches the object, the object detection device 200 of the present embodiment estimates the arrival direction of the reception wave using the Doppler shift that can occur in the reception wave. In other words, the position information on the object in the vertical direction is acquired, the accuracy of the position information on the object is improved, and it can be more efficiently determined, for example, whether the object avoidance processing is necessary or not.

By configuring the object detection device 200 as follows, estimation of the arrival direction of the reception wave and the like are realized.

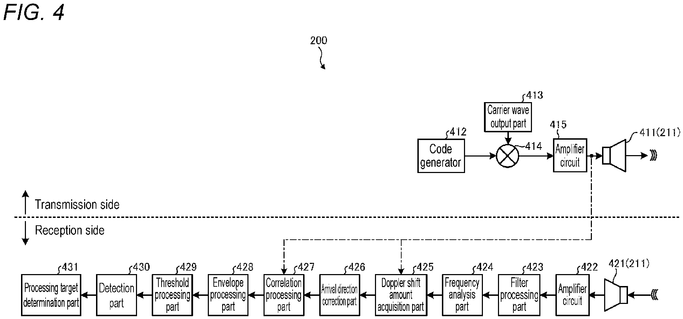

FIG. 4 is an exemplary schematic block diagram illustrating a detailed configuration of the object detection device 200 according to the embodiment.

In the example illustrated in FIG. 4, the configuration on the transmission side and the configuration on the reception side are separated, but such an illustrated aspect is merely for convenience of description. Therefore, in the embodiment, both the transmission of the transmission wave and the reception of the reception wave can be realized by the (single) transceiver 210 having the (single) vibrator 211, as described above. However, the technique of the embodiment can be naturally applied also to the configuration in which the configuration on the transmission side and the configuration on the reception side are separated, as mentioned above.

As illustrated in FIG. 4, the object detection device 200 includes, as the configuration on the transmission side, a transmitter 411, a code generator 412, a carrier wave output part 413, a multiplier 414, and an amplifier circuit 415. Note that the transmitter 411 is an example of the "transmission part".

Furthermore, the object detection device 200 includes, as the configuration on the reception side, a receiver 421, an amplifier circuit 422, a filter processing part 423, a frequency analysis part 424, a Doppler shift amount acquisition part 425, an arrival direction estimation part 426, a correlation processing part 427, an envelope processing part 428, a threshold processing part 429, a detection part 430, and a processing target determination part 431. Note that the receiver 421 is an example of the "reception part".

In the embodiment, at least a part of the configuration illustrated in FIG. 4 can be realized by dedicated hardware (analog circuit), and the remaining part can be realized as a result of cooperation between hardware and software, more specifically, as a result that the processor 223 of the object detection device 200 reads computer programs from the storage device 222 for execution. Furthermore, in the embodiment, each configuration illustrated in FIG. 4 may operate under the control by the controller 220 of the object detection device 200 itself, or may operate under the control by the external ECU 100.

First, the configuration on the transmission side will be briefly described.

The transmitter 411 includes the vibrator 211 described above, and transmits a transmission wave corresponding to the (amplified) transmission signal output from the amplifier circuit 415 by the vibrator 211.

In the embodiment, the transmitter 411 transmits a transmission wave in a predetermined frequency band, for example, a transmission wave of a frequency corresponding to the resonance frequency of the transmitter 411.

As illustrated in FIG. 1, a plurality of the object detection devices 200 (205 to 208) are disposed on the front bumper of vehicle 1, and the transmitter 411 of each object detection device 200 is configured to transmit the transmission wave substantially simultaneously with the transmitters 411 of the other object detection devices 200 under control by, for example, the ECU 100. Therefore, in the embodiment, it is desirable that identification information that can be identified is given to each transmission wave in order to be able to identify the transmission source of the transmission wave that has returned as the reception wave. Therefore, the code generator 412 generates a signal corresponding to the identification information for each object detection device 200 to be given to the transmission wave, for example, a pulse signal corresponding to a code of bit string including a succession of 0 or 1 bits.

The carrier wave output part 413 outputs a carrier wave as a signal to which the identification information is to be given. The carrier wave output part 413 outputs, for example, a sine wave of a predetermined frequency as the carrier wave.

The multiplier 414 executes modulation of the carrier wave so as to give the identification information by multiplying an output from the code generator 412 and an output from the carrier wave output part 413. That is, the multiplier 414 outputs a modulated carrier wave to which the identification information has been given. Then, the multiplier 414 outputs the modulated carrier wave, to which the identification information has been given, to the amplifier circuit 415 as a transmission signal that is a source of the transmission wave.

The amplifier circuit 415 amplifies the transmission signal output from the multiplier 414, and outputs the amplified transmission signal to the transmitter 411. In the present embodiment, the transmitter 411 transmits, for example, a transmission wave of the same frequency as the resonance frequency of the transmitter 411.

Next, the configuration of the reception side will be briefly described.

The receiver 421 includes the vibrator 211 described above, and receives by the vibrator 211 a transmission wave reflected by an object as the reception wave.

The amplifier circuit 422 amplifies a reception signal as a signal corresponding to the reception wave received by the receiver 421.

The filter processing part 423 performs filtering processing on the reception signal amplified by the amplifier circuit 422 to reduce noise.

The frequency analysis part 424 executes frequency analysis (spectrum analysis) based on fast Fourier transform (FFT) or the like on the reception signal subjected to the filtering processing by the filter processing part 423. Then, the frequency analysis part 424 detects, for example, a frequency at which the signal level of the reception wave reaches a peak equal to or higher than a threshold.

Here, in the embodiment, the identification information is given to the transmission wave on the basis of the frequency modulation, as described above, but the identification information should not be basically lost due to the reflection. Therefore, when similarity between the identification information of the transmission wave and that of the reception wave is determined, it is possible to easily detect which transmitter 411 the reception wave has been transmitted from and has returned after being reflected on an object.

Meanwhile, a case, where, as illustrated in FIG. 5, the vehicle 1 is traveling, for example, forward and the gate 500 (object) exists in front of the vehicle 1, will be considered. The gate 500 is configured, as an example, in a way in which a pair of pillars 500a (500a1, 500a2) erected at an interval wider than the vehicle width of the vehicle 1 are connected by a beam 500b at a position higher than the vehicle height of the vehicle 1 (e.g., a position at a ground height of 2.8 m). In this case, the reception wave that has returned after the transmission wave transmitted from the object detection device 200 (transmitter 411) was reflected on the gate 500 is a signal for detecting the entire gate 500 as an object. In this case, the vehicle 1 can actually pass between the pillars 500a of the gate 500, but since the gate 500 including the beam 500b is detected as an object (obstacle), object detection processing may be executed to avoid contact with the gate 500.

Therefore, in the case of the object detection device 200 of the present embodiment, an object existing at a position where the object cannot be an obstacle to the vehicle 1 (e.g., an object existing at a high position in the vertical direction from the road surface) is identified.

Specifically, the relative position with the gate 500 changes when the vehicle 1 is traveling, and hence the transmission wave (echo E) of a resonance frequency transmitted from the transmitter 411 returns as the reception wave in a state in which a frequency transition due to the Doppler shift occurs. Therefore, the Doppler shift amount acquisition part 425 acquires the first Doppler shift amount between the transmission wave and the reception wave on the basis of the reception frequency as a result of the frequency analysis by the frequency analysis part 424 on the reception wave and the transmission frequency of the transmission wave transmitted by the transmitter 411.

For example, FIG. 6 is an exemplary schematic diagram illustrating a relationship between the vehicle 1 and gate 500 illustrated in FIG. 5 as viewed from above. FIG. 6 is a diagram focusing on, among the object detection devices 200 (only three of 205, 206, and 207 are illustrated) arranged in the vehicle width direction on the front bumper 1a of the vehicle 1, the object detection device 206. In this case, the second Doppler shift amount in a case where it is assumed that the reception wave has returned from substantially the front indicates a value changed by a transition amount based on the vehicle speed that the vehicle 1 can acquire by the vehicle speed sensor 10 or the like. Note that, here, the substantially the front includes, for example, a left oblique front, a right oblique front, and the like in addition to a straight front on a plane at an installation height from a road surface on which the object detection device 200 exists (a plane substantially parallel to the road surface). That is, it means a direction in which, with respect to the object detection device 200, the elevation angle and the depression angle in the traveling direction of the vehicle 1 are substantially "0°". Therefore, the reception wave from the pillar 500a1 also shows a value changed by a transition amount based on the vehicle speed of the vehicle 1.

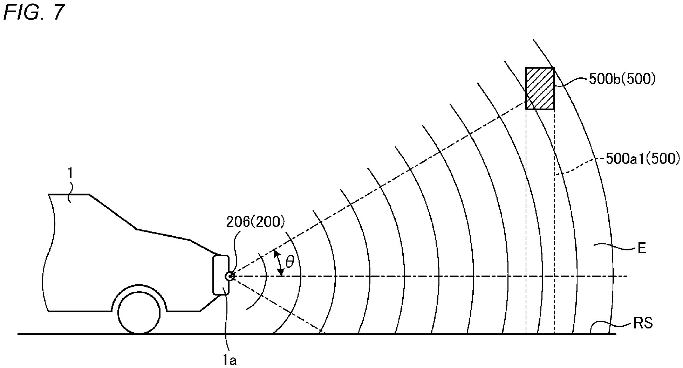

Next, FIG. 7 is an exemplary schematic diagram illustrating the relationship between the vehicle 1 and gate 500 (object) illustrated in FIG. 5 as viewed from a side. FIG. 7 illustrates, as an example, a case where the transmission wave (echo E) transmitted by the object detection device 206 is reflected on the beam 500b existing to be bridged over a pair of the pillars 500a (of a pair of the pillars 500a, only one pillar 500a1 is illustrated) extending upward in the vertical direction from the road surface RS.

As illustrated in FIG. 7, with respect to the Doppler shift amount (second Doppler shift amount) of the reception wave from a direction in which, with respect to substantially the front in the traveling direction of the vehicle 1 (direction in which the elevation angle and the depression angle are substantially "0°" with respect to the object detection device 200), the Doppler shift amount (first Doppler shift amount) of the reception wave from the beam 500b existing above the position in substantially the front is considered. In this case, each Doppler shift amount changes by cosθ. For example, in the case of substantially the front of the vehicle 1 (cosθ: θ = substantially "0°"), cosθ = 1, and thus, the Doppler shift amount (second Doppler shift amount) is a value corresponding to the current vehicle speed of the vehicle 1, as described above.

On the other hand, the Doppler shift amount (first Doppler shift amount) of the reception wave from the beam 500b existing above the position in substantially the front becomes a value weaker than the second Doppler shift amount by cosθ (value of 1 or less). Therefore, the arrival direction estimation part 426 can estimate the angle θ of the elevation angle or the depression angle with respect to substantially the front direction of the traveling direction of the vehicle 1, that is, the arrival direction of the reception wave (reflected wave), on the basis of the first Doppler shift amount and the second Doppler shift amount.

The correlation processing part 427 acquires a correlation value corresponding to the similarity between the identification information of the transmission wave and that of the reception wave on the basis of, for example, a transmission signal acquired from the configuration on the transmission side and a reception signal whose arrival direction has been estimated by the arrival direction estimation part 426. The correlation value is calculated on the basis of a generally well-known correlation function or the like.

Then, the envelope processing part 428 obtains an envelope of the waveform of a signal corresponding to the correlation value acquired by the correlation processing part 427.

Then, the threshold processing part 429 compares the value of the envelope obtained by the envelope processing part 428 with a predetermined threshold, and determines whether or not the identification information of the transmission wave is similar to that of the reception wave at a predetermined level or higher on the basis of the comparison result.

Then, based on the processing result by the threshold processing part 429, the detection part 430 specifies a timing when the similarity between the identification information of the transmission wave and that of the reception wave becomes a predetermined level or higher, that is, a timing when the signal level of the reception wave as the transmission wave that has returned after being reflected reaches a peak exceeding the threshold (e.g., the timing t4 illustrated in FIG. 2), and detects the distance to the object by the TOF method.

As described above, the plurality of the object detection devices 200 arranged in the vehicle width direction on the front bumper 1a of the vehicle 1 estimate the arrival directions of the respective reception waves. Then, the distance to the object (in the case of FIG. 7, the beam 500b) on which the transmission wave has been reflected is detected by the TOF method. When the arrival direction (θ: elevation angle or depression angle) of the reception wave and the distance can be detected, the position (including the position information in the height direction) of the object, on which the transmission wave has been reflected, can be detected. Therefore, the processing target determination part 431 calculates, for example, an average value of the arrival directions of the respective reception waves (respective detected positions) to acquire a position that can be regarded as the center of the object (e.g., a position of center of gravity). As a result, it is possible to more accurately grasp the position of the object. Furthermore, the processing target determination part 431 can set a range (non-contact range) in which an object that does not come into contact with the vehicle 1 can exist, on the basis of the vehicle width information, the vehicle height information, and the like on the vehicle 1, and the angle θ and distance included in the position information on the object. In the case of FIG. 7, a height equal to or higher than the vehicle height of the vehicle 1 in the vertical direction from the road surface RS is set as the non-contact range. In other words, an object existing in the non-contact range does not need to be made a target of the contact avoidance processing. Therefore, the processing target determination part 431 can determine a processing mode of the reception wave on the basis of the arrival direction of the reception wave. Specifically, the position information only on an object existing outside the non-contact range, as an object that is likely to come into contact, may be provided to the ECU that controls object avoidance on the vehicle 1 side. As a result, it is possible to reduce the object avoidance processing in the ECU.

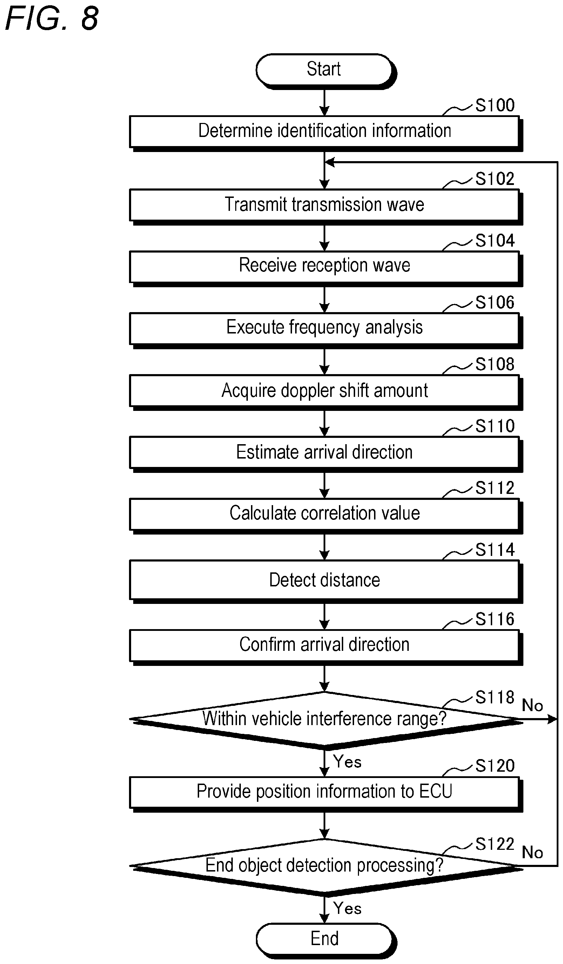

An example of a flow of processing related to object detection by the object detection device 200 (object detection system) configured as described above will be described with reference to the flowchart of FIG. 8.

First, the code generator 412 of each object detection device 200 determines identification information for identifying the transmission wave to be transmitted by the transmitter 411 (S100). Subsequently, the transmitter 411 of each object detection device 200 transmits the transmission wave to which the identification information has been given (S102), and the receiver 421 of each object detection device 200 receives the reception wave (S104). Note that it is assumed that the frequency of the transmission wave is, for example, the same as the resonance frequency of the transmitter 411.

The reception wave received by the receiver 421 of each object detection device 200 is amplified by the amplifier circuit 422, subjected to the filter processing by the filter processing part 423, and then subjected to the frequency analysis processing (S106).

Subsequently, the Doppler shift amount acquisition part 425 of each object detection device 200 executes processing of acquiring the first Doppler shift amount between the transmission wave and the reception wave on the basis of the reception frequency as a result of the frequency analysis on the reception wave and the transmission frequency (e.g., the resonance frequency of the transmitter 411) of the transmission wave transmitted by the transmitter 411 (S108).

Then, the arrival direction estimation part 426 of each object detection device 200 executes processing of estimating the arrival direction of the reception wave on the basis of the first Doppler shift amount and the second Doppler shift amount (Doppler shift amount corresponding to the speed of the vehicle 1) in a case where it is assumed that the reception wave has returned from substantially the front (S110).

Then, each object detection device 200 executes correlation processing of acquiring a correlation value corresponding to the similarity between the identification information of the transmission wave and that of the reception wave by the correlation processing part 427 (S112).

Then, each object detection device 200 calculates, in the envelope processing part 428, an envelope of the waveform of a signal corresponding to the correlation value acquired by the correlation processing part 427, and the threshold processing part 429 compares the value of the envelope with a predetermined threshold and determines whether or not the identification information of the transmission wave is similar to that of the reception wave at a predetermined level or higher on the basis of the comparison result. Then, the detection part 430 specifies a timing when the similarity between the identification information of the transmission wave and that of the reception wave becomes a predetermined level or higher, that is, a timing when the signal level of the reception wave as the transmission wave that has returned after being reflected reaches a peak exceeding the threshold (e.g., the timing t4 illustrated in FIG. 2), and detects the distance to the object by the TOF method (S114).

Then, the processing target determination part 431 of each object detection device 200 calculates an average value of the arrival directions of the respective reception waves (more specifically, respective detected positions), acquires a position that can be regarded as the center of the object (e.g., a position of center of gravity), and executes processing of confirming a more accurate position of the object (confirming the arrival direction of the reflected wave) (S116).

The processing target determination part 431 determines whether or not the confirmed position of the object (arrival direction of the reflected wave) is within a vehicle interference range when the vehicle 1 continues traveling (S118). When the confirmed position of the object (arrival direction of the reflected wave) is out of the vehicle interference range (Yes in S118), the position information on the detected object is provided to the ECU that controls object avoidance on the vehicle 1 side (S 120). That is, the ECU that controls object avoidance on the vehicle 1 side is made to execute processing of avoiding contact with the object.

When not receiving a command indicating the end of the object detection processing (No in S122), each object detection device 200 then returns to the processing of S102, executes transmission processing and reception processing of the transmission wave at predetermined cycles, and repeats the subsequent processing. Furthermore, when the command indicating the end of the object detection processing is received in S 122 (Yes in S 122), for example, when the ignition switch or the like of the vehicle 1 is turned off, the processing of this flow is temporarily ended.

Furthermore, it includes, in the processing of S 118, a case where the confirmed position of the object (arrival direction of the reflected wave) is not within the vehicle interference range (No in S 118), for example, a case where the position of the obj ect is higher than the vehicle height of the vehicle 1 or a case where the arrival direction of the reflected wave is from a direction in which the vehicle 1 cannot head. In this case, the vehicle 1 does not need to perform the object avoidance processing, and thus the processing target determination part 431 returns to the processing of S 102 without providing the confirmed position information on the object to the ECU that controls the object avoidance on the vehicle 1 side, executes the transmission processing and reception processing of the transmission wave at predetermined cycles, and repeats the subsequent processing.

According to the object detection device 200 (object detection system) of the present embodiment, it is possible, even in a case where the plurality of the object detection devices 200 are arranged in the vehicle width direction of the vehicle 1, to estimate the arrival direction of an object on the basis of the Doppler shift amount when the relative position between the vehicle 1 and the object changes, as described above. As a result, when the position of an object (the arrival direction of the reflected wave reflected on an object) cannot interfere with the vehicle 1, it is possible to omit provision of the position information on the object to the ECU that controls object avoidance on the vehicle 1 side. That is, it is possible to reduce the processing load of the ECU that controls object avoidance on the vehicle 1 side, and it is possible to suppress the vehicle 1 from being made to execute an unnecessary object avoidance operation.

Note that, in the above-described example, the gate 500 existing in front in the traveling direction of the vehicle 1 is illustrated as an example of the object. However, in a case where an object exists in a vertical direction (height direction) perpendicular to a road surface on which the vehicle 1 travels, the technique of the present embodiment can be applied, and similar effects can be obtained. The technique of the present embodiment can also be applied to, for example, a bridge girder that crosses three-dimensionally, a structure including a signboard, a sign, or a display device that has a leg installed on a road shoulder and has a display area projecting toward a traveling road side at the tip of the leg, and a structure such as a beam in a parking lot, and it is possible to more accurately detect the position of an object similarly to the present embodiment. Furthermore, it is possible to satisfactorily detect a road surface by applying the technique of the present embodiment.

Furthermore, by acquiring position information on an object in substantially the vertical direction (elevation angle direction or depression angle direction) with respect to a road surface using the Doppler shift amount of a reflected wave, as described above, it is not necessary to narrow the directivity of the transceivers 210 (transmitter 411, receiver 421) more than necessary. As a result, it is possible to perform appropriate object detection while securing a wide object detection range by the object detection device 200.

Note that, in the above-described embodiment, the case where the vehicle 1 travels forward has been described. However, even in a case where the vehicle 1 travels in the backward direction, it is similarly possible to detect the position of an object (estimation of the arrival direction of a reflected wave), and similar effects can be obtained. In this case, the object detection devices 201 to 204 are used.

Furthermore, in the above-described embodiment, an example has been described in which the positional relationship changes relatively when the vehicle 1 approaches a stopped object. However, when the positions of the vehicle 1 and an object changes relatively and the Doppler shift amount can be measured, the technique of the present embodiment can be applied and similar effects can be obtained.

Note that, in the above-described embodiment, the technique of the present disclosure is applied to a configuration that detects information on an object by transmission and reception of ultrasonic waves. However, the technique of the present disclosure can also be applied to a configuration that detects information on an object by transmission and reception of sound waves, millimeter waves, electromagnetic waves, or the like as waves other than ultrasonic waves.

Furthermore, in the above-described embodiment, a configuration that detects, as the information on an object, the distance to the object has been described as an example. However, the technique of the present disclosure can also be applied to a configuration that detects, as the information on an object, only a direction in which the object exists (arrival direction of a reflected wave).

Although the present embodiment and modifications have been described above, the above-described embodiment and modifications are merely examples, and are not intended to limit the scope of the invention. The above-described novel embodiment and modifications can be implemented in various forms, and various omissions, replacements, and changes can be made without departing from the gist of the invention. The above-described embodiment and modifications are included in the scope and gist of the invention, and are included in the invention described in the claims and the equivalent scope thereof.

### REFERENCE SIGNS LIST

1: Vehicle, 10: Vehicle speed sensor, 200: Object detection device, 210: Transceiver, 211: Vibrator, 411: Transmitter, 421: Receiver, 424: Frequency analysis part, 425: Doppler shift amount acquisition part, 426: Arrival direction estimation part, 431: Processing target determination part, 500: Gate, 500a: Pillar, and 500b: Beam

## Claims

1. An object detection system comprising a plurality of object detection devices arranged at predetermined intervals, wherein
each of the plurality of object detection devices includes:
a transmission part that transmits a transmission wave of a predetermined frequency in a state in which a positional relationship between a position of the object detection device and a position of an object to be detected changes relatively;
a reception part that receives a reception wave based on the transmission wave that has returned in response to reflection on the object;
an acquisition part that acquires a first Doppler shift amount between the transmission wave and the reception wave on the basis of a reception frequency as a result of frequency analysis on the reception wave and a transmission frequency of the transmission wave;
an estimation part that estimates an arrival direction of the reception wave on the basis of the first Doppler shift amount and a second Doppler shift amount in a case where it is assumed that the reception wave has returned from substantially a front; and
a determination part that determines a processing mode of the reception wave on the basis of the arrival direction of the reception wave.

2. The object detection system according to claim 1, wherein
the plurality of object detection devices are arranged in a vehicle width direction of a vehicle, and
the estimation part estimates the arrival direction of the reception wave in at least one of an elevation angle direction and a depression angle direction with respect to a traveling direction of the vehicle.

3. The object detection system according to claim 1, wherein the estimation part calculates the second Doppler shift amount on the basis of a value changed by a transition amount based on a vehicle speed that the vehicle can acquire by a vehicle speed sensor.

4. The object detection system according to claim 2, wherein the estimation part estimates the position of an object from an average value of the arrival directions of the reception waves in the elevation angle direction or the depression angle direction in each of the plurality of object detection devices.

5. An object detection device comprising:
a transmission part that transmits a transmission wave of a predetermined frequency in a state in which a positional relationship with respect to an object to be detected changes relatively;
a reception part that receives a reception wave based on the transmission wave that has returned in response to reflection on the object;
an acquisition part that acquires a first Doppler shift amount between the transmission wave and the reception wave on the basis of a reception frequency as a result of frequency analysis on the reception wave and the transmission frequency of the transmission wave;
an estimation part that estimates an arrival direction of the reception wave on the basis of the first Doppler shift amount and a second Doppler shift amount in a case where it is assumed that the reception wave has returned from substantially a front; and
a determination part that determines a processing mode of the reception wave on the basis of the arrival direction of the reception wave.
